Europäisches Patentamt

European Patent Office

Office européen des brevets

(19)

(11) Numéro de publication: **0 227 597 B1**

# (12) FASCICULE DE BREVET EUROPEEN

(45) Date de publication du fascicule du brevet:
07.11.90

(51) Int. Cl.⁵: **G01L 1/22, G01G 3/14**

(21) Numéro de dépôt: 86810573.5

(22) Date de dépôt: 08.12.86

(54) **Capteur à jauge de contrainte pour la mesure de forces.**

(30) Priorité: 17.12.85 CH 5381/85

(43) Date de publication de la demande:
01.07.87 Bulletin 87/27

(45) Mention de la délivrance du brevet:
07.11.90 Bulletin 90/45

(84) Etats contractants désignés:
AT BE CH DE ES FR GB IT LI LU NL SE

(56) Documents cités:
FR-A- 2 247 698
FR-A- 2 505 496
FR-A- 2 509 465
FR-A- 2 527 768

PATENT ABSTRACTS OF JAPAN,
vol. 5, no. 191 (P-92)[863], 5 décembre 1981; &
JP-A-56 114 734 (MATSUSHITA DENKI SANGYO
K.K.) 09-09-1981
PATENT ABSTRACTS OF JAPAN,
vol. 5, no. 134 (P-77)[806], 26 août 1981; &
JP-A-56 72 323 (MATSUSHITA DENKI SANGYO
K.K.) 16-06-1981

Le dossier contient des informations techniques
présentées postérieurement au dépôt de la demande et
ne figurant pas dans le présent fascicule.

(73) Titulaire: S.C.A.I.M.E., Route de Thonon Juvigny,
F-74100 Annemasse(FR)

(72) Inventeur: Aumard, Jean-Pierre, 5 place du Jumelage,
F-74100 Annemasse(FR)

(74) Mandataire: Kirker, Gaylord Emile et al, c/o KIRKER &
Cie S.A. 14, Rue du Mont-Blanc Case postale 872,
CH-1211 Genève 1(CH)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

On connaît déjà des capteurs à jauge de contrainte pour la mesure de forces qui sont constitués par des blocs métalliques dans lesquels il a été pratiqué des évidements, de manière à former des parties affaiblies sur lesquelles on dispose une ou plusieurs jauges de contrainte. Un capteur de ce genre est décrit dans le brevet fançais 2.509.465 et dans son addition 2.527.768. L'évidement est obtenu par fraisage dans un bloc de métal parallélépipédique . Pour des balances de très grande série, de tels capteurs sont coûteux en raison de la quantité de métal utilisée et de l'opération de fraisage dans la masse.

Dans la demande de brevet français publiée No 2 247 698, il est décrit un capteur à jauges de contrainte comprenant un profilé ouvert, en forme de U, dont les ailes sont entaillées de façon symétrique, tandis qu'une ou plusieurs jauges de contrainte sont fixées sur la partie de l'âme du profilé située entre ces entailles. Cette disposition rend le capteur sensible à la traction exercée sur le profilé, mais très peu sensible à la flexion.

La présente invention a pour but de fournir un capteur à jauge de contrainte pour mesure de forces qui soit peu coûteux et de fabrication simple. Ce capteur est conforme à la revendication 1. Le dessin annexé représente à titre d'exemple trois formes d'exécution du capteur selon l'invention.

Figure 1 est une vue latérale de la première forme d'exécution.

Figure 2 est une vue en coupe transversale selon 2-2 de fig. 1.

Figure 3 est une vue en plan correspondant à la fig. 1.

Figure 4 est une vue latérale de la deuxième forme d'exécution.

Figure 5 est une vue en bout correspondant à la fig. 4.

Figure 6 est une vue en plan correspondant à la fig. 4.

Figure 7 est une vue en perspective de la troisième forme d'exécution.

Figure 8 est une vue en plan, à plus petite échelle, correspondant à la fig. 7.

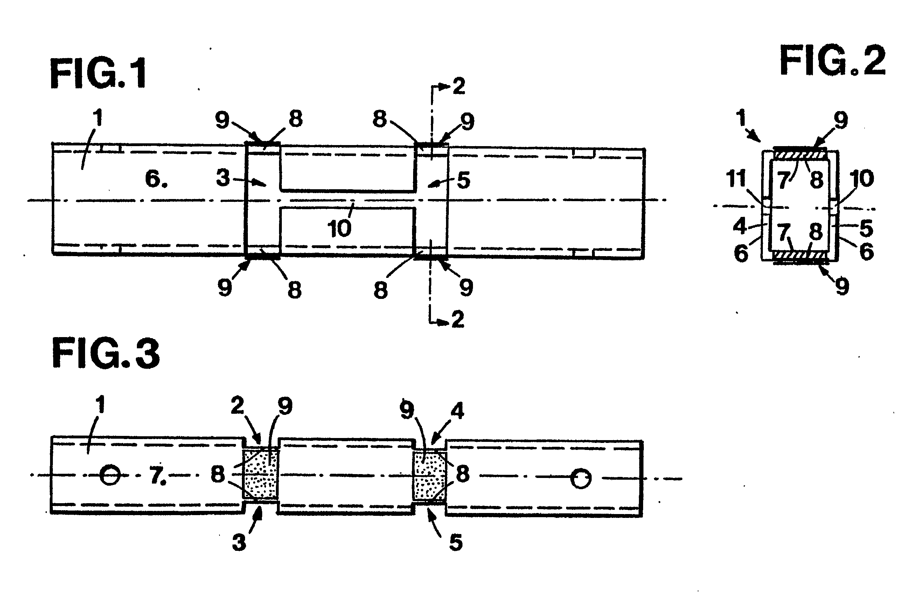

Le capteur représenté sur les figures 1 à 3 est constitué par un profilé métallique creux 1 de section transversale rectangulaire, comme on le voit sur la fig. 2. Dans ce profilé, il a été pratiqué deux paires d'entailles transversales rectangulaires que l'on voit en 2, 3, respectivement 4, 5, qui sont suffisamment profondes pour traverser chacune complètement l'épaisseur de l'une des grandes parois latérales 6, de sorte qu'à l'endroit de ces entailles les petites parois latérales 7 se trouvent réduites à deux régions intactes formant des ponts 8 constituant des parties affaiblies sur lesquelles on fixe des jauges de contrainte 9. Les entailles 3 et 5 sont réunies par une entaille longitudinale 10. De même, les entailles symétriques 2 et 4 sont réunies par une entaille longitudinale 11.

On remarquera la disposition parfaitement symétrique des entailles et des positions occupées par les quatre jauges de contrainte.

Dans la deuxième forme d'exécution, on voit en 12 un profilé métallique creux, de section transversale rectangulaire, comportant une paroi intérieure longitudinale médiane 13, dans lequel on a pratiqué des entailles de la façon suivante. Une première paire d'entailles transversales symétriques est pratiquée en 14, 15, de profondeur suffisante pour traverser l'épaisseur de la grande paroi latérale correspondante.

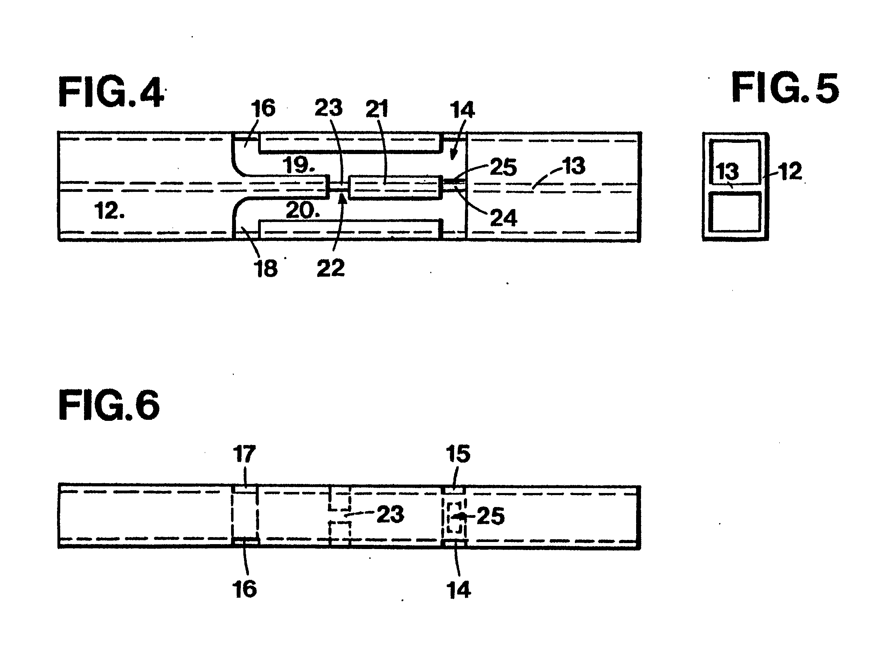

Deux entailles transversales symétriques 16, 17, sont pratiquées sur moins de la moitié de la hauteur des grandes faces latérales. Deux autres entailles transversales symétriques, dont une seule est visible en 18, sont pratiquées dans le prolongement des entailles 16, 17 mais aussi sur une longueur inférieure à la moitié de la hauteur des grandes faces latérales. Deux entailles longitudinales 19, 20, sont pratiquées dans chacune des grandes faces latérales, pour réunir entre elles les entailles 14, 16 d'une part et 14, 18 d'autre part. Le pont constitué sur chacune des grandes faces latérales et dont un seul est visible en 21 est lui aussi entaillé transversalement, comme on le voit en 22, pour ne laisser à cet endroit qu'un pont 23 constitué par la paroi médiane 13. Par ailleurs, l'extrémité de droite sur la figure 4, de cette paroi médiane 13 constitue un pont 24 sur lequel on a fixé une jauge de contrainte 25 ou un pont de jauges.

Le pont 23 a pour but de transmettre à l'élément 21 les déformations dans le plan vertical, du parallélogramme dont, sur la figure 4, les sommets sont aux endroits des quatre parties déformables des petites faces comprises entre les entailles.

Dans une variante, la liaison entre les entailles 14 et 18, 14 et 16, 15 et 17, etc... pourrait être de forme différente de celle représentée. L'essentiel est que cette liaison détermine des parties affaiblies sur la paroi médiane 13, sur l'une desquelles on dispose la jauge de contrainte 25.

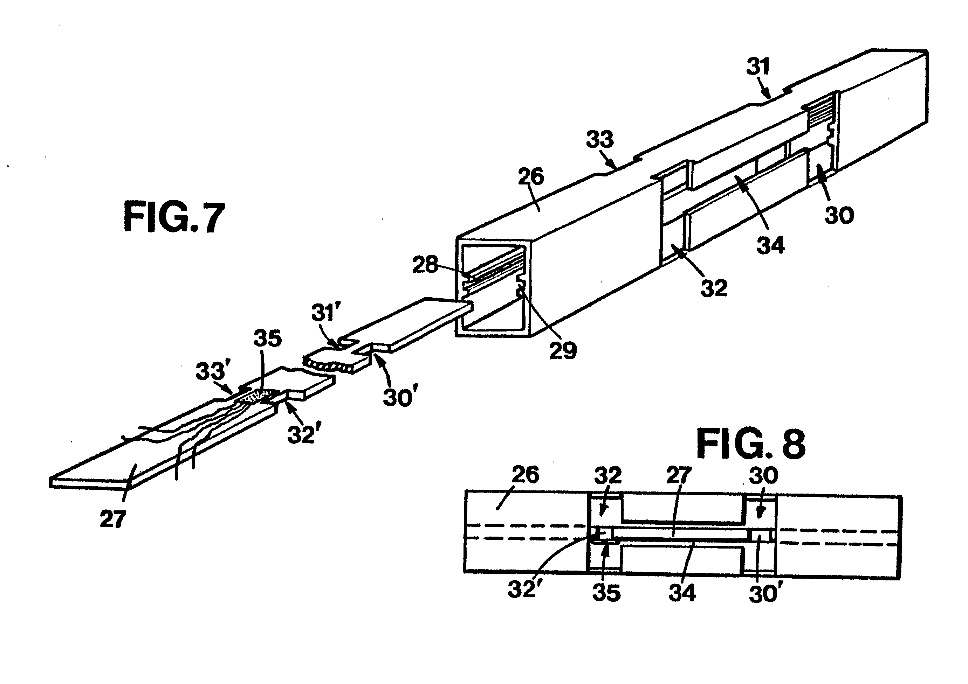

Dans la forme d'exécution selon les fig. 7 et 8, on voit en 26 un profilé métallique creux, de section transversale rectangulaire, comportant une paroi intérieure longitudinale médiane constituée à être engagée et fixée (par collage ou autrement) dans deux coulisses longitudinales 28, 29 prévues et se faisant face à l'intérieur du profilé 26.

Une première paire d'entailles transversales symétriques 30, 31 sont pratiquées dans le profilé 26. Leur profondeur est suffisante pour traverser l'épaisseur d'une grande paroi latérale correspondante.

Une seconde paire d'entailles transversales symétriques, semblables, sont pratiquées en 32, 33 dans le profilé 26.

Sur chacune des grandes faces du profilé 26 il est pratiqué une entaille longitudinale. Une seule de ces entailles symétriques est visible en 34. Ces entailles 34 relient, l'une les entailles 30 et 32 et l'autre les entailles symétriques 31, 33.

On voit sur la fig. 7 la plaque 27 avant son insertion définitive dans le profilé 26 et après qu'on ait fixé sur elle, comme on le voit en 35, une jauge de contrainte ou un pont de jauges de contrainte.

La plaque 27 présente des entailles symétriques 30', 31µ et 32µ, 33µ qui sont faites après que la plaque 27 soit insérée provisoirement dans le profilé 27, lorsque l'on pratique les entailles respectives 30, 31 et 32, 33.

Dans l'exemple des fig. 4 à 6, le travail de mise en place des jauges de contrainte contre les parties entaillées de la cloison médiane 13, comme on le voit en 25 par exemple, est assez délicat et long, d'autant plus qu'il faut encore faire passer ensuite les fils de liaison à l'intérieur du profilé 12. Dans le cas des fig. 7 et 8, cet inconvénient est complètement évité. Les jauges de contrainte telles que 35 peuvent être posées en série (avec leurs fils de liaison) sur des plaques 27, aux endroits des affaiblissements de ces plaques (fig. 7). Ces plaques sont ensuite pressées ensemble, après quoi chaque plaque 27 est enfilée dans un profilé 27 où elle est fixée définitivement par collage ou autrement dans les coulisses 28, 29.

Dans un variante, la section transversale du profilé utilisé pourrait être autre que rectangulaire, par exemple polygonale, à condition que les entailles transversales soient pratiquées d'une façon symétrique et déterminent entre elles des régions affaiblies d'une ou plusieurs parois du profilé.

## Revendications

1. Capteur à jauge de contrainte, pour la mesure des forces, comprenant un profilé creux (1) métallique muni d'une jauge de contrainte, caractérisé en ce que:
le profilé creux (1) est de section transversale rectangulaire (6,7) fermée, en ce que
ce profilé creux (1) présente au moins deux entailles transversales (2,3 ; 4,5) disposées symétriquement l'une par rapport à l'autre et traversant chacune l'épaisseur de la paroi latérale (6) de ce profilé creux (1) en un même endroit de la longueur de celui-ci
et laissant entre elles des régions intactes mais mécaniquement affaiblies (8) du profilé creux (1), qui sont de ce fait particulièrement sensibles à la flexion, et en ce que
une jauge de contrainte (9) est fixée sur au moins une des régions intactes mais mécaniquement affaiblies (8) du profilé creux (1).

2. Capteur selon la revendication 1, caractérisé en ce que les entailles transversales (2,3 ; 4,5) sont rectangulaires et symétriques sur les deux grandes faces (6) du profilé creux (1) et s'étendent selon une direction perpendiculaire aux deux petites faces (7) du profilé creux (1) sur toute la longueur des grandes faces (6), de façon que les parties affaiblies (8) soient formées par des bandes symétriques des petites faces (7).

3. Capteur selon la revendication 2, caractérisé en ce qu'il présente deux paires d'entailles transversales symétriques, disposées à distance l'une de l'autre, et en ce qu'il présente deux entailles longitudinales symétriques (10,11) coupant les grandes faces (6) dans leur milieu et s'étendant chacune de la première paire d'entailles transversales symétriques (2,3) jusqu'à la deuxième paire d'entailles transversales symétriques (3,4), une jauge de contrainte (9) étant fixée sur chacune des quatre parties affaiblies (8) des petites faces (7) formant des ponts reliant les deux parties d'extrémités non entaillées du profilé creux (1).

4. Capteur selon la revendication 1, caractérisé en ce que le profilé (12) présente une paroi intérieure longitudinale médiane (13) disposée parallèlement aux petites faces (7) du profilé (12), en ce que les deux entailles transversales symétriques produisent aussi un affaiblissement local (24) de cette paroi intérieure longitudinale médiane (13) et en ce qu'une jauge ou un pont de jauges de contrainte (25) est disposée sur cette partie à affaiblissement local (24) de la paroi intérieure longitudinale médiane (13).

5. Capteur selon la revendication 4, caractérisé en ce qu'il présente en outre deux autres paires d'entailles transversales symétriques (16,17 ; 18) distantes des entailles transversales symétriques précédentes et ne s'étendant chacune que sur moins de la moitié de la largeur des grandes faces (6), quatre fentes longitudinales (19, 20) pratiquées dans ces grandes faces (6) reliant chacune de ces autres paires d'entailles transversales symétriques (16,17 ; 18) à l'une des premières entailles transversales symétriques.

6. Capteur selon la revendication 5, caractérisé en ce qu'il comporte une troisième paire d'entailles transversales symétriques (22), pratiquées dans une région de la paroi médiane restante des parties des grandes faces (6) comprises entre les entailles transversales symétriques et les deuxième paire d'entailles transversales symétriques (3,4), pour former une seconde partie affaiblie (23) de la paroi intérieure longitudinale médiane (13).

7. Capteur selon la revendication 4, caractérisé en ce que la paroi intérieure longitudinale médiane (13) est une plaque allongée (27) insérée et fixée dans des coulisses longitudinales (28,29) prévues à l'intérieur du profilé creux (1), en étant munie d'au moins une jauge ou d'un pont de jauges de contrainte (25) fixée sur une partie affaiblie de cette plaque allongée (27).

## Claims

1. A strain-gauge sensor for measuring forces, comprising a hollow metal profile (1) equipped with a strain gauge, characterized in that the hollow profile (1) has a closed rectangular cross-section (6, 7), in that this hollow profile (1) has at least two transverse notches (2, 3; 4, 5) arranged symmetrically relative to one another and each passing through the thickness of the side wall (6) of this hollow profile (1) at one and the same location along the length of the latter, and leaving intact but mechanically weakened regions (8) of the hollow profile (1) between them, said regions therefore being particularly sensitive to bending, and in that a strain gauge (9) is fixed to at least one of the intact but mechanically weakened regions (8) of the hollow profile (1).

2. A sensor according to Claim 1, characterized in that the transverse notches (2, 3; 4, 5) are rectangular and symmetrical on the two large faces (6) of the hollow profile (1) and run in a direction perpendicular to the two small faces (7) of the hollow profile (1) over the whole length of the large faces (6), so that the weakened parts (8) are formed by symmetrical strips of the small faces (7).

3. A sensor according to Claim 2, characterized in that it has two pairs of symmetrical transverse notches arranged at a distance from one another, and in that it has two symmetrical longitudinal notches (10, 11) intersecting the large faces (6) in their middle and each running from the first pair of symmetrical transverse notches (2, 3) to the second pair of symmetrical transverse notches (4, 5), a strain gauge (9) being fixed to each of the four weakened parts (8) of the small faces (7), forming bridges joining the two unnotched end parts of the hollow profile (1).

4. A sensor according to Claim 1, characterized in that the profile (12) has a median longitudinal inner wall (13) arranged parallel to the small faces (7) of the profile (12), in that the two symmetrical transverse notches also produce a locally weakened part (24) of this median longitudinal inner wall (13), and in that a strain gauge or bridge of strain gauges (25) is arranged on this locally weakened part (24) of the median longitudinal inner wall (13).

5. A sensor according to Claim 4, characterized in that it also has two other pairs of symmetrical transverse notches (16, 17; 18) at a distance from the previous symmetrical transverse notches and each running only over less than half the width of the large faces (6), four longitudinal slots (19, 20), made in these large faces (6), joining each of these other pairs of symmetrical transverse notches (16, 17; 18) to one of the first symmetrical transverse notches.

6. A sensor according to Claim 5, characterized in that it comprises a third pair of symmetrical transverse notches (22) made in a region of the remaining median wall of those parts of the large faces (6) which are between the first pair of symmetrical transverse notches and the second pair of symmetrical transverse notches (4, 5), to form a second weakened part (23) of the median longitudinal inner wall (13).

7. A sensor according to Claim 4, characterized in that the median longitudinal inner wall (13) is an elongate plate (27) inserted and fixed in longitudinal slides (28, 29) provided inside the hollow profile (1), said elongate plate being equipped with at least one strain gauge or bridge of strain gauges (25) fixed to a weakened part of this elongate plate (27).

**Patentansprüche**

1. Detektor mit Spannungsmess-Stück, zur Messung von Kräften mit einem metallischen hohlen Profilstück (1), welches das Spannungsmess-Stück trägt, dadurch gekennzeichnet, dass das hohle Profil (1) einen geschlossenen rechteckigen Querschnitt (6,7) aufweist und dass dieses hohle Profil (1) mindestens zwei Quer-Einkerbungen (2,3 ; 4,5) aufweist, die symmetrisch zueinander angeordnet sind und durchgehend durch die Seitenwand (6) dieses hohlen Profils (1) an einem gleichen Ort in bezug auf die Länge des Profils sich befinden, zwischen ihnen vollständigen Portionen des hohlen Profils (1) beibehaltend, die jedoch mechanisch geschwächt sind und deswegen auf Biegung besonders empfindlich sind und, dass ein Spannungsmess-Stück (9) auf mindestens eine der vollständig erhaltenen aber mechanisch geschwächten Portionen (8) des hohlen Profils (1) angebracht ist.

2. Detektor gemäss Anspruch 1, dadurch gekennzeichnet, dass die Quer-Einkerbungen (2,3 ; 4,5) rechteckig und symmetrisch auf den beiden grossen Seiten (6) des hohlen Profilstückes (1) sind und sich in der Richtung senkrecht zu den kleinen Seiten (7) des hohlen Profils (1) auf der ganzen Länge der grossen Seiten (6) sich ausdehnen, so dass die geschwächten Portionen (8) durch symmetrische Streifen der kleinen Seiten (7) gebildet sind.

3. Detektor gemäss Anspruch 2, dadurch gekennzeichnet, dass er zwei symmetrische Quer-Einkerbungspaare besitzt, die voneinander entfernt angeordnet sind, und dass er zwei symmetrische Längs-Einkerbungen (10,11) besitzt, welche die grossen Seiten (6) in ihrer Mitte schneiden und sich jede vom ersten symmetrischen Quer-Einkerbungspaar (2,3) bis zum zweiten symmetrischen Einkerbungspaar (3,4) ausdehnt, wobei ein Spannungsmess-Stück (9) auf jede der vier geschwächten Portionen (8) der kleinen Seiten (7), welche Brücken bilden um die nicht eingekerbten Enden des hohlen Profils (1) zu verbinden, befestigt ist.

4. Detektor gemäss Anspruch 1, dadurch gekennzeichnet, dass das Profilstück (12) eine innere Längswand (13), die in der Mitte von und parallel zu den kleinen Seiten (7) des hohlen Profils (12) angeordnet ist, dass die zwei symmetrischen Quer-Einkerbungen auch eine örtliche Schwächung (24) dieser mittleren inneren Längswand (13) bringt und dass ein Spannungsmess-Stück oder eine Brücke von Spannungsmess-Stücken (25) auf dieser Portion mit örtlicher Abschwächung (24) der mittleren inneren Längswand (13) angeordnet ist.

5. Detektor gemäss Anspruch 4, dadurch gekennzeichnet, dass er zusätzlich zwei weitere symmetrische Quer-Einkerbungspaare (16,17 ; 18) aufweist, die im Abstand zu den früheren symmetrischen Quer-Einkerbungen angeordnet sind und jedes auf weniger als die Hälfte der Breite der grossen Seiten (6) sich ausdehnt, wobei vier Längsschnitte (19, 20) auf diesen grossen Seiten (6) angeordnet sind und jede der weiteren symmetrischen Quer-Einkerbungspaare (16,17 ; 18), mit einer der früheren symmetrischen Quer-Einkerbungen verbinden.

6. Detektor gemäss Anspruch 5, dadurch gekennzeichnet, dass er ein drittes Paar von Quer-Einkerbungen (22) aufweist, die in einer Gegend der verbleibenden mittleren Wand der Teile der grossen Seiten (6), die sich zwischen den symmetrischen Quer-Einkerbungen und den zweiten Paaren von symmetrischen Quer-Einkerbungen (3,4) befinden, um ein zweite geschwächte Portion (23) der mittleren inneren Längswand (13) zu bilden.

7. Detektor gemäss Anspruch 4, dadurch gekennzeichnet, dass die mittlere innere Längswand (13) eine längliche Platte (27) ist, die in Längsführungen (28,29), die im Innern des hohlen Profils (1) vorgesehen sind, eingefügt und befestigt ist und die mindestens ein Spannungsmess-Stück oder eine Brücke von Spannungsmess-Stücken (25) trägt, welche auf einer geschwächten Portion dieser länglichen Platte (27) befestigt ist.

FIG.1

FIG.2

FIG.3

FIG.5

FIG.4

FIG.6

FIG.7

FIG. 8